# EUROPEAN PATENT SPECIFICATION

(11) **EP 2 646 662 B1**
(45) Date of publication and mention of the grant of the patent: **25.02.2015**
(21) Application number: 10821443.8
(22) Date of filing: 01.12.2010
(51) Int. Cl.: F01N 3/027, F01N 3/021, F01N 3/023, F01N 3/20

(54) **ENGINE ARRANGEMENT COMPRISING AN EXHAUST GASES AFTER-TREATMENT SYSTEM**
MOTORANORDNUNG MIT EINEM ABGASNACHBEHANDLUNGSSYSTEM
AGENCEMENT DE MOTEUR COMPRENANT UN SYSTÈME DE POST-TRAITEMENT DES GAZ D'ÉCHAPPEMENT

(43) Date of publication of application: 09.10.2013
(73) Proprietor: Volvo Lastvagnar AB, 405 08 Göteborg (SE)
(72) Inventor: PETIT, Jean-Pascal, F-69250 Montanay (FR)
(74) Representative: Faucheux, Jérôme
(86) International application number: PCT/IB2010/003477
(87) International publication number: WO 2012/073068

(56) References cited:
- WO-A1-2010/070100
- WO-A2-03/004134
- DE-U1-202009 005 251

## Description

### Field of the invention

The present invention relates to an engine arrangement comprising an exhaust gases after-treatment system, especially but not exclusively in a vehicle.

### Technological background

Exhaust gases formed in the combustion of fuel in an internal combustion engine, in particular in industrial vehicles, may contain a proportion of undesirable components such as nitrogen oxides (NOx), carbon monoxide (CO), un-burnt hydrocarbons (HC), soot, etc...

To reduce air pollution, vehicles are therefore equipped with various after-treatment systems that deal with undesirable substances in exhaust gases.

A common exhaust gases after-treatment is a so called selective catalytic reduction (SCR). Exhaust gases wherein ammonia is used as a reducer are treated in a specific catalytic converter where nitrogen oxides are converted into water and nitrogen which are both non toxic substances. Ammonia may be introduced in the form of urea in an aqueous solution from which ammonia is obtained through hydrolysis. The urea solution is usually nebulised in the exhaust gas upstream from the catalytic converter. To this end, a urea injection nozzle is fitted on the exhaust pipe upstream from the catalytic converter.

One problem with this type of exhaust gases treatment is that the efficiency of the catalytic converter greatly depends on the temperature of the exhaust gases which flow through it. But, in some operating conditions of the engine, said temperature can be relatively low, for example around 200°C, which results in a poor efficiency of the catalytic converter.

Another problem is that, before it has transformed into ammonia, urea can crystallize. In concrete terms, the aqueous solution of urea which is sprayed through the nozzle inside the exhaust pipe, according to a direction which is angled with respect to the exhaust gases flow direction, tends to form a solid deposit on the exhaust pipe wall, on the internal side thereof, for example opposite of the injection point. The consequence is that the cross section of the exhaust pipe is progressively reduced, which makes the engine efficiency decrease and which can seriously impair the engine operation in the long term.

Another example of an exhaust after-treatment system comprises a diesel particle filter which removes un-burnt particles contained in the exhaust gases. Such a filter may eventually become clogged with the particles and needs to be regenerated from time to time. One way of regenerating the filter is to increase the exhaust gases temperature up to a point where the particles trapped in the filter are oxidized.

Such a regeneration requires to supply a significant amount of energy for this precise goal, which affects the overall efficiency of the engine arrangement Besides, said regeneration often forces the driver to stop the vehicle during the regeneration process, which of course is not desirable.

It therefore appears that, from several standpoints, there is room for improvement in engine arrangements equipped with an exhaust gases after-treatment system.

WO 2010/070100 describes an exhaust after treatment system having a particulate filter and an ScR catalyst

### Summary

It is an object of the present invention to provide an engine arrangement which can improve the efficiency of the exhaust gases after-treatment process, and possible filter regeneration process, by reducing the energy required for this.

Another object of the invention is to improve the exhaust gases after-treatment process on other aspects, in particular by reducing the solid deposit of urea on the exhaust pipe wall.

According to the invention such an engine arrangement comprises:
- an internal combustion engine and an exhaust pipe capable of collecting exhaust gases from said engine;
- an exhaust gases after-treatment system comprising an injection device designed to inject an exhaust treatment fluid inside the exhaust pipe, and an after-treatment device located downstream from the injection device, for at least partially removing undesired components from the exhaust gases;
- a bypass line branching from the exhaust pipe upstream from the injection device, and capable of carrying a sub-flow of the exhaust gases towards a supply device which is arranged at the after-treatment device inlet and which is designed to direct said sub-flow towards a sector of the after-treatment device, while the exhaust gases flowing in the exhaust pipe towards the after-treatment device pass through the complementary portion of the after-treatment device;
- a heater designed to heat the exhaust gases sub-flow;
- and an additional injection device designed to inject an exhaust treatment fluid inside the bypass line.

Thus, in an engine arrangement according to the invention, a sub-flow of the exhaust gases is treated in the corresponding sector of the exhaust gases after-treatment device at a higher temperature, thanks to the heater. This results in an improved efficiency of the treatment in said sector, and therefore in an improved overall efficiency of the exhaust gases after-treatment device, even if the gases passing through the complementary portion of the after-treatment device are not so hot.

In an implementation of the invention, when the efficiency of the exhaust gases after-treatment device substantially forms a plateau beyond a temperature threshold, the temperature of the heated exhaust gases sub-flow can be controlled to remain close to said threshold. As a consequence, the efficiency of the exhaust gases after-treatment device is maximized while the required energy is minimized.

Therefore, the invention makes it possible to use less energy to obtain the same engine arrangement efficiency as in the prior art, or to improve the engine arrangement efficiency when using as much energy as in the prior art.

Another significant advantage of the invention is that the engine operating conditions can be set less restrainedly - regarding the emission of undesired components - since the improved efficiency of the exhaust gases after-treatment device helps meeting the requirements relating to the content of said undesired components at the exhaust pipe outlet.

These and other features and advantages will become apparent upon reading the following description in view of the drawings attached hereto representing, as non-limiting examples, embodiments of an engine arrangement according to the invention.

### Brief description of the drawings

The following detailed description of several embodiments of the invention is better understood when read in conjunction with the appended drawings being understood, however, that the invention is not limited to the specific embodiments disclosed.
Figure 1 is a schematic drawing of an engine arrangement according to a first embodiment of the invention, comprising a catalytic converter equipped with a supply device;
Figure 2 is a cross section of the catalytic converter of figure 1 taken along line II-II, schematically showing the sector of the catalytic converter through which a sub-flow of exhaust gases can pass;
Figure 3 is a schematic drawing of an engine arrangement according to a second embodiment of the invention, comprising a catalytic converter equipped with a supply device, as well as a particle filter equipped with an inlet canalizing device and an outlet canalizing device;
Figure 4 is a cross section of the particle filter of figure 3 taken along line IV-IV, schematically showing the sector of the particle filter through which a sub-flow of exhaust gases can pass;
Figure 5 is an exploded perspective view of the part of the exhaust pipe comprising the inlet canalizing device, the particle filter and the outlet canalizing device.

### Detailed description of the invention

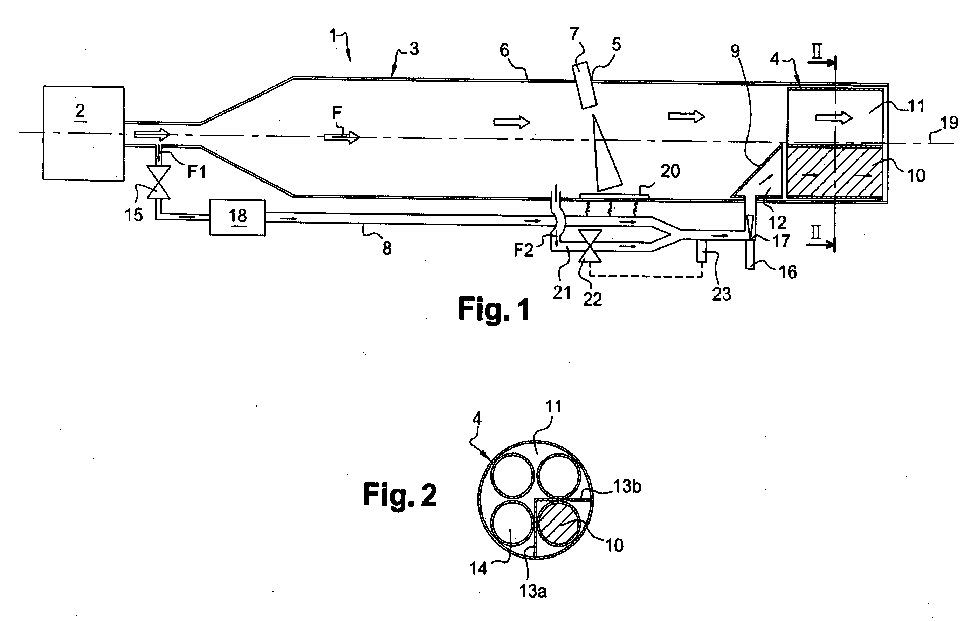

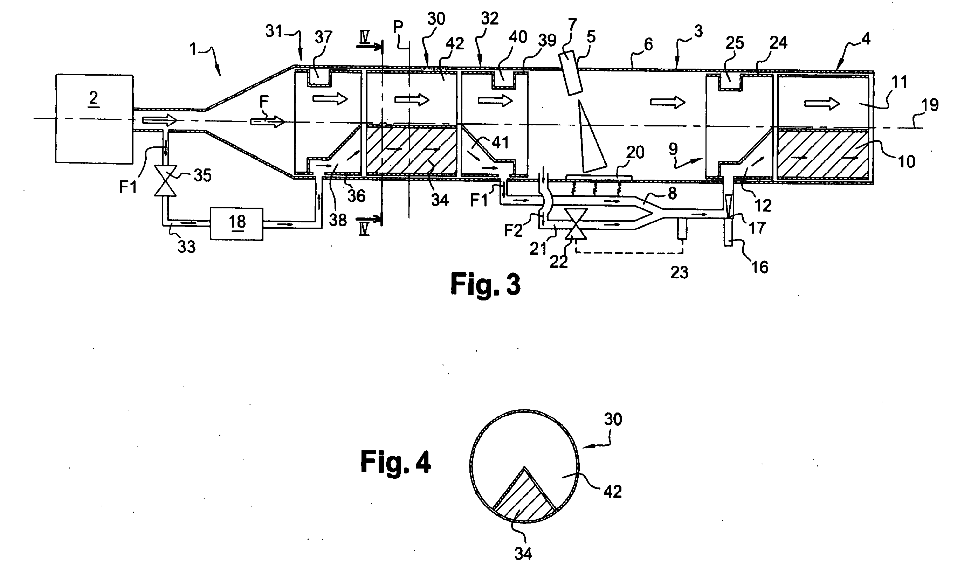

The engine arrangement 1 shown on Figures 1 and 3 comprises an internal combustion engine 2, which can be a diesel engine or a spark ignition engine. An exhaust pipe 3 is provided to direct the exhaust gases of the engine 2 towards an exhaust gases after-treatment system before being released into the atmosphere.

A first embodiment of the invention is now described with reference to Figures 1 and 2.

In this embodiment, the exhaust gases after-treatment system is for example of the selective catalytic reduction type (SCR), and is intended to remove at least part of the nitrogen oxides (NOx) from the exhaust gases.

Said exhaust gases after-treatment system comprises an after-treatment device 4 which is a catalytic converter.

Upstream from the catalytic converter 4, an injection inlet 5 is provided in the exhaust pipe wall 6, through which an exhaust treatment fluid can be injected by means of an injection device 7 which generally comprises a nozzle. The exhaust treatment fluid is in this case a reducing fluid, or a precursor thereof, capable of reducing nitrogen oxides (NOx). In the illustrated embodiment, the fluid is an aqueous solution of urea. In practice, the nitrogen oxides mixed with the exhaust treatment fluid can be converted into water and nitrogen in the catalytic converter 4.

According to the invention, the engine arrangement 1 further comprises a bypass line 8 which branches from the exhaust pipe 3 upstream from the injection device 7 and is capable of carrying a sub-flow F1 of the exhaust gases towards a supply device 9 which is arranged at the inlet of the catalytic converter 4. The supply device 9 is designed to direct said sub-flow F1 towards a sector 10 of the catalytic converter 4. The flow F of the exhaust gases which does not enter the bypass line 8 but passes in the exhaust pipe 3 towards the catalytic converter 4 passes through the complementary portion 11 of said catalytic converter 4. Except for a possible bleeder flow which will be described hereunder, the flows F and F1 are separate through the catalytic converter. They may be mixed again at the outlet of the catalytic converter.

By way of example, the sub-flow F1 can be around 10% of the global exhaust gases flow at the engine outlet.

As this is illustrated in Figure 1, the supply device 9 can form a channel 12 having an inlet close to the exhaust pipe wall 6, in which the bypass line 8 emerges. The channel 12 preferably widens towards its outlet which is located close to the catalytic converter inlet. For example, the supply device 9 can comprise two walls 13a, 13b giving to the channel outlet the form of a portion of a disc, as shown on Figure 2. In the case of a catalytic converter 4 comprising several adjacent tubes 14 arranged in parallel, said portion of a disc preferably coincides with one or several tubes 14 of said catalytic converter 4. In the illustrative example of Figure 2, the catalytic converter 4 comprises four tubes 14. The walls 13a, 13b are substantially orthogonal, and the channel outlet has the form of a quarter of a disc which coincides with the inlet of one tube 14. Said tube 14 forms the sector 10 of the catalytic converter 4 through which passes the sub-flow F1 of exhaust gases, while the three other tubes 14 form the complementary portion 11 of the catalytic converter 4 through which passes the flow F of the exhaust gases not flowing in the bypass line 8.

The bypass line 8 may be equipped with a valve 15 to actively control the sub-flow F1 of exhaust gases flowing in said bypass line 8 or even to set it to zero if appropriate, depending on engine operating conditions.

The engine arrangement 1 also comprises an additional injection device 16, which can comprise a nozzle. Said additional injection device 16 is designed to inject an exhaust treatment fluid inside the bypass line 8, through an injection inlet 17. The exhaust treatment fluid is preferably the same fluid as the fluid injected by injection device 7. The additional injection device 16 can be located close to the bypass line outlet, i.e. close to the channel inlet.

The engine arrangement 1 further comprises a heater 18 designed to heat the exhaust gases sub-flow F1. The heater 18 can be an electric heater, a fuel burner, etc.

As shown on Figure 1, the heater 18 can be located on the bypass line 8, for example downstream from the valve 15. In this embodiment, the heater 18 is a dedicated heater for the bypass line 8, the only function of said heater 18 being to heat the exhaust gases sub-flow F1. The heater does not heat the flow F which does not flow in the bypass line.

In practice, a sub-flow F1 is diverted from the exhaust pipe 3 and carried by the bypass line 8, in which it is heated by the heater 18, towards a sector 10 of the catalytic converter 4. Before they enter said catalytic converter 4, the exhaust gases are mixed with the fluid injected by the additional injection device 16, in order to be treated in the catalytic converter 4. The treatment efficiency of these gases is improved because of the higher temperature of said gases. Said temperature can typically be around 300°C, while the temperature of the exhaust gases which have not been heated can be as low as 200°C, which would lead to a poor efficiency of the catalytic converter 4. In addition, thanks to the fact that a dedicated additional injection device is provided for the bypass line 8, there is substantially no risk of crystallization of urea in the bypass line because the fluid is injected in a flow of exhaust gases which is preferably maintained at at least 300°C, which means that no solid deposit is likely to form opposite the injection inlet 17 of the additional injection device 16.

Besides, the remaining flow F of exhaust gases is carried towards the catalytic converter 4 by the exhaust pipe 3, is mixed with the fluid injected by the injection device 5 and passes through the complementary portion of the catalytic converter 4 in order to be treated. The treatment efficiency of the flow F gases is lower than the one of the sub-flow F1 because of the lower temperature of said gases. However, thanks to the invention, the overall efficiency of the catalytic converter 4 is improved, at a minimum cost in terms of amount of energy needed to heat the exhaust gases, because only a fraction F1 of the total flow of exhaust gases is heated by heater 18.

The bypass line 8 can be arranged close enough to an impact area 20 of the exhaust pipe wall 6 opposite the injection inlet 5 so as to bring heat to said impact area 20. This disposition makes it possible to limit the risk of crystallization of urea on said impact area 20. Furthermore, with this arrangement, it would be possible to hydrolyse urea in the exhaust pipe 3 at lower temperatures than in the prior art, for example around 190°C. As a result, a better catalytic conversion could occur in the complementary portion 11 of the catalytic converter, even at relatively low temperatures, and the content of NOx in the gases released towards the atmosphere could be further reduced.

The engine arrangement 1 can further comprise a bleeder line 21 branching from the exhaust pipe 3 upstream from the injection device 7 and connected to said bypass line 8. In the shown embodiment, the bleeder line 21 is connected to the bypass line 8 upstream from the additional injection device 16. The bleeder line 21 is designed to carry a part (sub-flow F2) of the exhaust gases not heated by the heater 18, in order for this sub-flow to be mixed with sub-flow F1. For example, the inlet of the bleeder line 21 is located downstream from the inlet of the bypass line 8. The bleeder line 21 is preferably equipped with a valve 22 which can be controlled depending on the temperature of the exhaust gases entering the supply device 9. For this purpose, there may be provided a temperature sensor 23 on the bypass line 8, downstream of the outlet of the bleeder line 21.

Preferably, the bleeder line 21 merges with the bypass line 8 downstream from the impact area 20, so that the bypass line 8 can transfer as mush heat as possible to said impact area 20. The bleeder line could merge with the by pass line 8 downstream from the additional injection device, so that the fluid is injected in gases with the highest possible temperature.

In case the temperature of the sub-flow F1 of the exhaust gases is too high, the valve 22 is opened to mix said sub-flow F1 with a sub-flow F2 of exhaust gases which have not been heated, in order to lower the temperature of the exhaust gases at the inlet of the catalytic converter 4. The catalytic converter 4 is therefore protected, since this disposition ensures that the temperature of the exhaust gases entering the catalytic converter 4 does not exceed a predetermined threshold. As an example, a temperature higher than 500°C could damage the catalytic converter 4. When the heater 18 provides exhaust gases at high temperature, for example higher than 350-400°C, the valve 22 may be controlled to mix sub-flow F1 with sub-flow F2 and maintain a high flow at an optimal temperature in the sector 10 of the catalytic converter 4. The appropriate control of valve 22 contributes to optimizing the overall conversion of the exhaust aftertreatement system.

In the embodiment depicted on Figure 1, the supply device 9 is fixed with respect to the exhaust pipe wall 6.

Alternatively, the supply device 9 and the after-treatment device 4 can be mounted in the exhaust pipe 3 in order to be able to rotate one with respect to the other around the exhaust pipe axis 19. As a result, the heated exhaust gases pass through successive sectors of the catalytic converter 4, around the exhaust pipe axis 19. This makes it possible to regenerate the catalytic converter 4 by removing the sulfates, with limited heating power.

This rotation can be achieved:
- either with a supply device 9 which is fixed with respect to the exhaust pipe 3 and an after-treatment device 4 which is arranged to rotate around the exhaust pipe axis 19;
- or with an after-treatment device 4 which is fixed with respect to the exhaust pipe 3 and a supply device 9 which is arranged to rotate around the exhaust pipe axis 19.

An example of a rotating supply device 9 is illustrated on Figure 3. Such a supply device 9 can comprise:
- a peripheral wall 24 having an annular groove 25 opening outwardly, the bypass line 8 emerging in said annular groove 25,
- and an outer channel 12 which widens from its inlet connected to said annular groove 25 towards its outlet emerging at the inlet of said sector 10 of the after-treatment device 4.

Thanks to the annular groove 25, a sector 10 of the catalytic converter 4 can be fed whatever the angular position of the supply device 9.

A second embodiment of the invention is now described with reference to Figures 3 to 5.

According to this second embodiment, the engine arrangement 1 further comprises a particle filter 30 located upstream from the inlet of the bypass line 8. An inlet canalizing device 31 is provided upstream from the particle filter 30 and an outlet canalizing device 32 is provided downstream from the particle filter 30.

Moreover, a parallel line 33 which branches from the exhaust pipe 3 upstream from the inlet canalizing device 31 is capable of carrying a sub-flow F1 of the exhaust gases towards the inlet canalizing device 31, which then directs said sub-flow F1 towards a sector 34 of the particle filter 30. The outlet canalizing device 32 is designed to collect said sub-flow F1 after it has passed through the particle filter 30 and to direct it towards the bypass line inlet. The inlet and outlet canalizing devices 31, 32 are designed to rotate in a synchronized way around the exhaust pipe axis 19 with respect to the particle filter 30. This can be a continuous or a step-by-step rotation.

In this embodiment, the heater 18 is preferably located on the parallel line 33, downstream from a valve 35, no heater being provided in the bypass line 8.

The inlet canalizing device 31 may have a design similar to that of the rotating supply device described above. It can comprise:
- a peripheral wall 36 having an annular groove 37 opening outwardly, the parallel line 33 emerging in said annular groove 37;
- and an outer channel 38 which widens from its inlet connected to said annular groove 37 towards its outlet emerging at the inlet of said sector 34 of the particle filter 30.

The outlet canalizing device 32 can also be designed similarly and can therefore comprise:
- a peripheral wall 39 having an annular groove 40 opening outwardly, the bypass line inlet emerging in said annular groove 40;
- and an outer channel 41 which gets narrower from its inlet connected to the outlet of said sector 34 of the particle filter 30 towards its outlet emerging in said annular groove 40.

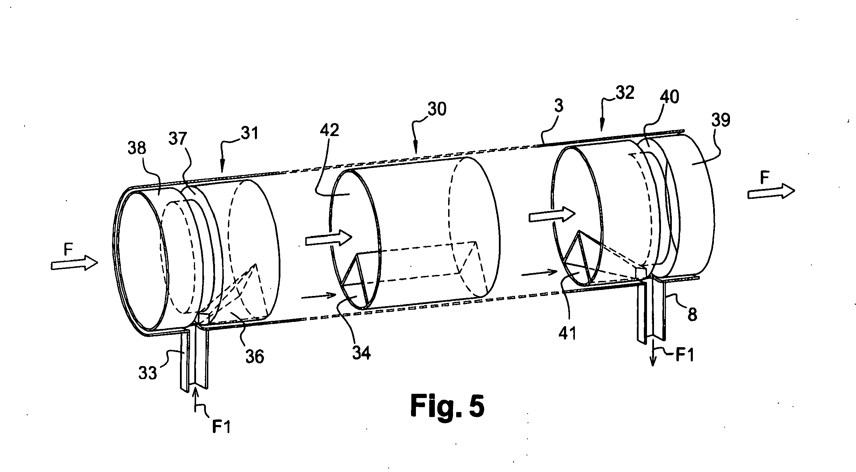

For example, as shown on Figures 3 and 5, the outlet canalizing device 32 and the inlet canalizing device 31 can be symmetrical with respect to the transversal median plane P of the particle filter 30.

The inlet and outlet canalizing devices could also be fixed, with the particle filter being mounted so as to rotate.

The downstream part of the engine arrangement 1 is similar to what is described with reference to Figure 1, and comprises an injection device 7, a supply device 9 and a catalytic converter 4, a bypass line 8 as well as, preferably, a bleeder line 21. Although the supply device 9 has been depicted as rotating, it could be fixed to the exhaust pipe wall 6 as in Figure 1.

In practice, a sub-flow F1 of exhaust gases is diverted from the flow F and flows in the parallel line 33, where it is heated by means of the heater 18 before entering the inlet canalizing device 31. For example, the exhaust gases of said sub-flow F1 can be heated up to at least 400°C, or even up to around 600°C in order to perform a quicker regeneration of the sector 34 of the filter 30. Said sub-flow F1 then crosses the sector 34 of the particle filter 30 and is collected by the outlet canalizing device 32 and then directed towards the catalytic converter 4 via the bypass line 8 and the supply device 9.

The remaining flow F which is carried by the exhaust pipe 3 and not by the parallel line 33 crosses the complementary portion 42 of the particle filter 30 towards the supply device 9 and the complementary portion 11 of the catalytic converter 4.

In this embodiment, the heater 18 heats the exhaust gases before they enter the particle filter 30. This temperature increase is used both for regenerating the filter 30 and for improving the catalytic converter efficiency.

Indeed, first of all, the sub-flow F1 of hot exhaust gases, when passing through the filter 30, causes the oxidization of the trapped particles in the sector 34 and therefore regenerates this sector 34 of the filter 30. Thanks to the rotation of the inlet and outlet canalizing devices 31, 32, successive sectors - in the form of portions of a disc as shown in Figure 4 - of the particle filter 30 are regenerated without the need to stop the engine 2.

Secondly, said sub-flow F1 of exhaust gases is directed towards the catalytic converter 4 to be treated. Because said sub-flow F1 is still hotter than the flow F of exhaust gases in the exhaust pipe 3, even if no heater is provided in the bypass line 8, the catalytic converter efficiency is improved. By way of example, a temperature of around 300°C leads to satisfactory results.

Moreover, as in the first embodiment described above, valve 22 may be adjusted to maintain an optimal temperature of the sector 10 : the valve 22 is controlled to maximize the fraction of exhaust gases going through the sub-flow F2 and maintain them close to the optimal temperature range for the conversion.

As a result, this embodiment of the invention brings significant advantages, both for the filter 30 and for the catalytic converter 4, and further improves the overall efficiency of the after-treatment system.

The outlet canalizing device 32 makes it possible to collect the heated exhaust gases and to direct them towards the bypass line 8. This leads to a higher converter efficiency as compared to a construction where the heated gases would be mixed with the remaining flow F before a sub-flow F1 is again diverted towards the bypass line 8. Indeed, the sub-flow F1 in the bypass line 8 would then be less hot.

Of course, the invention is not restricted to the embodiments described above by way of non-limiting examples, but on the contrary it encompasses all embodiments thereof.

## Claims

1. An engine arrangement comprising:
- an internal combustion engine (2) and an exhaust pipe (3) capable of collecting exhaust gases from said engine (2);
- an exhaust gases after-treatment system comprising an injection device (7) designed to inject an exhaust treatment fluid inside the exhaust pipe (3), and an after-treatment device (4) located downstream from the injection device (7), for at least partially removing undesired components from the exhaust gases;
- a bypass line (8) branching from the exhaust pipe (3) upstream from the injection device (7), and capable of carrying a sub-flow (F1) of the exhaust gases towards a supply device (9) which is arranged at the after-treatment device inlet and which is designed to direct said sub-flow (F1) towards a sector (10) of the after-treatment device (4), while the exhaust gases flowing in the exhaust pipe (3) towards the after-treatment device (4) pass through the complementary portion (11) of the after-treatment device (4);
- a heater (18) designed to heat the exhaust gases sub-flow (F1);
**characterized in that** it further comprises
- an additional injection device (16) designed to inject an exhaust treatment fluid inside the bypass line (8).

2. The engine arrangement according to claim 1, **characterized in that** the bypass line (8) is arranged close enough to an impact area (20) of the exhaust pipe wall (6) opposite the injection inlet (5) so as to bring heat to said impact area (20).

3. The engine arrangement according to claim 1 or claim 2, **characterized in that** the supply device (9) and the after-treatment device (4) are mounted in the exhaust pipe (3) in order to be able to rotate one with respect to the other around the exhaust pipe axis (19).

4. The engine arrangement according to claim 3, **characterized in that** the after-treatment device (4) is fixed with respect to the exhaust pipe (3), and **in that** the supply device (9) is arranged to rotate around the exhaust pipe axis (19).

5. The engine arrangement according to claim 4, **characterized in that** the supply device (9) comprises:
- a peripheral wall (24) having an annular groove (25) opening outwardly, the bypass line (8) emerging in said annular groove (25);
- and an outer channel (12) which widens from its inlet connected to said annular groove (25) towards its outlet emerging at the inlet of said sector (10) of the after-treatment device (4).

6. The engine arrangement according to any one of claims 1 to 5, **characterized in that** it further comprises a bleeder line (21) branching from the exhaust pipe (3) upstream from the injection device (7) and connected to said bypass line (8), said bleeder line (21) being designed to carry a part (F2) of the exhaust gases not heated by the heater (18).

7. The engine arrangement according to claim 6, **characterized in that** the bleeder line (21) is equipped with a valve (22) controlled depending on the temperature of the exhaust gases entering the supply device (9).

8. The engine arrangement according to any one of claims 1 to 7, **characterized in that** the heater (18) is located on said bypass line (8).

9. The engine arrangement according to any one of claims 1 to 7, **characterized in that** it further comprises:
- a particle filter (30) located upstream from the bypass line inlet;
- an inlet canalizing device (31) located upstream from the particle filter (30) and an outlet canalizing device (32) located downstream from the particle filter (30);
- a parallel line (33) branching from the exhaust pipe (3) upstream from the inlet canalizing device (31) and capable of carrying a sub-flow (F1) of the exhaust gases towards the inlet canalizing device (31) which then directs said sub-flow (F1) towards a sector (34) of the particle filter (30);
the outlet canalizing device (32) being designed to collect said sub-flow (F1) after it has passed through the particle filter (30) and to direct it towards the bypass line inlet, the heater (18) being located on said parallel line (33).

10. The engine arrangement according to claim 8, **characterized in that** the inlet and outlet canalizing devices (31, 32), on the one hand, and the particle filter (30), on the other hand, are mounted in the exhaust pipe (3) in order to be able to rotate one with respect to the other around the exhaust pipe axis (19).

11. The engine arrangement according to claim 9 or 10, **characterized in that** the inlet canalizing device (31) comprises:
- a peripheral wall (36) having an annular groove (37) opening outwardly, the parallel line (33) emerging in said annular groove (37);
- and an outer channel (38) which widens from its inlet connected to said annular groove (37) towards its outlet emerging at the inlet of said sector (34) of the particle filter (30).

12. The engine arrangement according to any of claims claim 9 to 11, **characterized in that** the outlet canalizing device (32) comprises:
- a peripheral wall (39) having an annular groove (40) opening outwardly, the bypass line inlet emerging in said annular groove (40);
- and an outer channel (41) which gets narrower from its inlet connected to the outlet of said sector (34) of the particle filter (30) towards its outlet emerging in said annular groove (40).

## Patentansprüche

1. Motoranordnung umfassend:
- einen Verbrennungsmotor (2) und ein Abgasrohr (3), das Abgase aus dem Motor (2) sammeln kann;
- ein Abgasnachbehandlungssystem, das eine Einspritzvorrichtung (7), die dazu ausgelegt ist, ein Abgasbehandlungsfluid innen in das Abgasrohr (3) einzuspritzen, und eine Nachbehandlungsvorrichtung (4) umfasst, die stromabwärts von der Einspritzvorrichtung (7) angeordnet ist, um unerwünschte Komponenten wenigstens teilweise aus den Abgasen zu entfernen;
- eine Bypass-Leitung (8), die stromaufwärts von der Einspritzvorrichtung (7) von dem Abgasrohr (3) abzweigt und einen Nebenstrom (F1) der Abgase in Richtung einer Zuführvorrichtung (9) führen kann, die an dem Nachbehandlungsvorrichtungseinlass angeordnet ist und die dazu ausgelegt ist, den Nebenstrom (F1) in Richtung eines Sektors (10) der Nachbehandlungsvorrichtung (4) zu richten, während die in dem Abgasrohr (3) in Richtung der Nachbehandlungsvorrichtung (4) strömenden Abgase durch den komplementären Abschnitt (11) der Nachbehandlungsvorrichtung (4) hindurchgehen;
- eine Heizeinrichtung (18), die dazu ausgelegt ist, den Abgas-Nebenstrom (F1) zu erwärmen;
**dadurch gekennzeichnet, dass** sie weiterhin umfasst:
- eine zusätzliche Einspritzvorrichtung (16), die dazu ausgelegt ist, ein Abgasbehandlungsfluid innen in die Bypass-Leitung (8) einzuspritzen.

2. Motoranordnung nach Anspruch 1, **dadurch gekennzeichnet, dass** die Bypass-Leitung (8) nahe genug an einem Aufprallbereich (20) der Abgasrohrwand (6) gegenüber dem Einspritzeinlass (5) angeordnet ist, um dem Aufprallbereich (20) Wärme zuzuführen.

3. Motoranordnung nach Anspruch 1 oder Anspruch 2, **dadurch gekennzeichnet, dass** die Zuführvorrichtung (9) und die Nachbehandlungsvorrichtung (4) in dem Abgasrohr (3) so angebracht sind, dass sie sich bezüglich einander um die Abgasrohrachse (19) drehen können.

4. Motoranordnung nach Anspruch 3, **dadurch gekennzeichnet, dass** die Nachbehandlungsvorrichtung (4) bezüglich des Abgasrohrs (3) befestigt ist und dass die Zuführvorrichtung (9) so angeordnet ist, dass sie sich um die Abgasrohrachse (19) drehen kann.

5. Motoranordnung nach Anspruch 4, **dadurch gekennzeichnet, dass** die Zuführvorrichtung (9) umfasst:
- eine Umfangswand (24), die eine sich nach außen öffnende Ringnut (25) aufweist, wobei die Bypass-Leitung (8) in die Ringnut (25) austritt;
- und einen äußeren Kanal (12), der sich von seinem mit der Ringnut (25) verbundenen Einlass zu seinem an dem Einlass des Sektors (10) der Nachbehandlungsvorrichtung (4) austretenden Auslass hin erweitert.

6. Motoranordnung nach irgendeinem der Ansprüche 1 bis 5, **dadurch gekennzeichnet, dass** sie weiterhin eine Abzugsleitung (21) umfasst, die von dem Abgasrohr (3) stromaufwärts von der Einspritzvorrichtung (7) abzweigt und mit der Bypass-Leitung (8) verbunden ist, wobei die Abzugsleitung (21) dazu ausgelegt ist, einen Teil (F2) der durch die Heizeinrichtung (18) nicht erwärmten Abgase mit sich zu führen.

7. Motoranordnung nach Anspruch 6, **dadurch gekennzeichnet, dass** die Abzugsleitung (21) mit einem Ventil (22) ausgestattet ist, das abhängig von der Temperatur der in die Zuführvorrichtung (9) eintretenden Abgase gesteuert wird.

8. Motoranordnung nach irgendeinem der Ansprüche 1 bis 7, **dadurch gekennzeichnet, dass** die Heizeinrichtung (18) an der Bypass-Leitung (8) angeordnet ist.

9. Motoranordnung nach irgendeinem der Ansprüche 1 bis 7, **dadurch gekennzeichnet, dass** sie weiterhin umfasst:
- einen Partikelfilter (30), der stromaufwärts von dem Bypass-Leitungseinlass angeordnet ist;
- eine Einlasskanalisierungsvorrichtung (31), die stromaufwärts von dem Partikelfilter (30) angeordnet ist, und eine Auslasskanalisierungsvorrichtung (32), die stromabwärts von dem Partikelfilter (30) angeordnet ist;
- eine parallele Leitung (33), die von dem Abgasrohr (3) stromaufwärts von der Einlasskanalisierungsvorrichtung (31) abzweigt und einen Nebenstrom (F1) der Abgase in Richtung der Einlasskanalisierungsvorrichtung (31) führen kann, die dann den Nebenstrom (F1) in Richtung eines Sektors (34) des Partikelfilters (30) richtet;
- wobei die Auslasskanalisierungsvorrichtung (32) dazu ausgelegt ist, den Nebenstrom (F1) zu sammeln, nachdem er durch den Partikelfilter (30) hindurchgegangen ist, und ihn in Richtung des Bypass-Leitungseinlasses zu richten, wobei die Heizeinrichtung (18) an der parallelen Leitung (33) angeordnet ist.

10. Motoranordnung nach Anspruch 8, **dadurch gekennzeichnet, dass** die Einlassund Auslasskanalisierungsvorrichtungen (31, 32) einerseits und der Partikelfilter (30) andererseits in dem Abgasrohr (3) so angebracht sind, dass sie sich bezüglich einander um die Abgasrohrachse (19) drehen können.

11. Motoranordnung nach Anspruch 9 oder 10, **dadurch gekennzeichnet, dass** die Einlasskanalisierungsvorrichtung (31) umfasst:
- eine Umfangswand (36), die eine sich nach außen öffnende Ringnut (37) aufweist, wobei die parallele Leitung (33) in die Ringnut (37) austritt;
- und einen äußeren Kanal (38), der sich von seinem mit der Ringnut (37) verbundenen Einlass zu seinem an dem Einlass des Sektors (34) des Partikelfilters (30) austretenden Auslass hin erweitert.

12. Motoranordnung nach irgendeinem der Ansprüche 9 bis 11, **dadurch gekennzeichnet, dass** die Auslasskanalisierungsvorrichtung (32) umfasst:
- eine Umfangswand (39), die eine sich nach außen öffnende Ringnut (40) aufweist, wobei der Bypass-Leitungseinlass in die Ringnut (40) austritt;
- und einen äußeren Kanal (41), der sich von seinem mit dem Auslass des Sektors (34) des Partikelfilters (30) verbundenen Einlass in Richtung seines in die Ringnut (40) austretenden Auslasses verengt.

## Revendications

1. Agencement de moteur comprenant :
- un moteur à combustion interne (2) et un tuyau d'échappement (3) apte à collecter les gaz d'échappement provenant dudit moteur (2) ;
- un système de post-traitement des gaz d'échappement comprenant un dispositif d'injection (7) conçu pour injecter un fluide de traitement d'échappement à l'intérieur du tuyau d'échappement (3), et un dispositif de post-traitement (4) situé en aval du dispositif d'injection (7), pour retirer au moins partiellement des composants indésirables des gaz d'échappement ;
- une conduite de dérivation (8) bifurquant à partir du tuyau d'échappement (3) en amont du dispositif d'injection (7), et apte à transporter un flux secondaire (F1) des gaz d'échappement en direction d'un dispositif d'alimentation (9) qui est disposé à l'entrée du dispositif de post-traitement et qui est conçu pour diriger ledit flux secondaire (F1) en direction d'un secteur (10) du dispositif de post-traitement (4), tandis que les gaz d'échappement s'écoulant dans le tuyau d'échappement (3) en direction du dispositif de post-traitement (4) traversent la partie complémentaire (11) du dispositif de post-traitement (4) ;
- un dispositif de chauffage (18) conçu pour chauffer le flux secondaire (F1) de gaz d'échappement ;
**caractérisé en ce qu'**il comprend en outre un dispositif d'injection supplémentaire (16) conçu pour injecter un fluide de traitement d'échappement à l'intérieur de la conduite de dérivation (8).

2. Agencement de moteur selon la revendication 1, **caractérisé en ce que** la conduite de dérivation (8) est disposée suffisamment près d'une zone d'impact (20) de la paroi (6) de tuyau d'échappement opposée à l'entrée d'injection (5) de manière à amener de la chaleur à ladite zone d'impact (20).

3. Agencement de moteur selon la revendication 1 ou la revendication 2, **caractérisé en ce que** le dispositif d'alimentation (9) et le dispositif de post-traitement (4) sont montés dans le tuyau d'échappement (3) afin d'être aptes à tourner l'un par rapport à l'autre autour de l'axe (19) de tuyau d'échappement.

4. Agencement de moteur selon la revendication 3, **caractérisé en ce que** le dispositif de post-traitement (4) est fixé par rapport au tuyau d'échappement (3), et **en ce que** le dispositif d'alimentation (9) est disposé de manière à tourner autour de l'axe (19) de tuyau d'échappement.

5. Agencement de moteur selon la revendication 4, **caractérisé en ce que** le dispositif d'alimentation (9) comprend :
- une paroi périphérique (24) ayant une rainure annulaire (25) s'ouvrant vers l'extérieur, la conduite de dérivation (8) émergeant dans ladite rainure annulaire (25) ;
- et un canal extérieur (12) qui s'élargit à partir de son entrée reliée à ladite rainure annulaire (25) en direction de sa sortie émergeant à l'entrée dudit secteur (10) du dispositif de post-traitement (4).

6. Agencement de moteur selon l'une quelconque des revendications 1 à 5, **caractérisé en ce qu'**il comprend en outre une conduite de soutirage (21) bifurquant à partir du tuyau d'échappement (3) en amont du dispositif d'injection (7) et connectée à ladite conduite de dérivation (8), ladite conduite de soutirage (21) étant conçue pour transporter une partie (F2) des gaz d'échappement non chauffée par le dispositif de chauffage (18).

7. Agencement de moteur selon la revendication 6, **caractérisé en ce que** la conduite de soutirage (21) est équipée d'une soupape (22) commandée en fonction de la température des gaz d'échappement pénétrant dans le dispositif d'alimentation (9).

8. Agencement de moteur selon l'une quelconque des revendications 1 à 7, **caractérisé en ce que** le dispositif de chauffage (18) est situé sur ladite conduite de dérivation (8).

9. Agencement de moteur selon l'une quelconque des revendications 1 à 7, **caractérisé en ce qu'**il comprend en outre :
- un filtre à particules (30) situé en amont de l'entrée de conduite de dérivation ;
- un dispositif de canalisation d'entrée (31) situé en amont du filtre à particules (30) et un dispositif de canalisation de sortie (32) situé en aval du filtre à particules (30) ;
- une conduite parallèle (33) bifurquant à partir du tuyau d'échappement (3) en amont du dispositif de canalisation d'entrée (31) et apte à transporter un flux secondaire (F1) des gaz d'échappement en direction du dispositif de canalisation d'entrée (31) qui dirige alors ledit flux secondaire (F1) en direction d'un secteur (34) du filtre à particules (30) ;
le dispositif de canalisation de sortie (32) étant conçu pour collecter ledit flux secondaire (F1) après qu'il a traversé le filtre à particules (30) et pour le diriger en direction de l'entrée de conduite de dérivation, le dispositif de chauffage (18) étant situé sur ladite conduite parallèle (33).

10. Agencement de moteur selon la revendication 8, **caractérisé en ce que** les dispositifs de canalisation d'entrée et de sortie (31, 32), d'une part, et le filtre à particules (30), d'autre part, sont montés dans le tuyau d'échappement (3) afin d'être aptes à tourner l'un par rapport à l'autre autour de l'axe (19) de tuyau d'échappement.

11. Agencement de moteur selon la revendication 9 ou 10, **caractérisé en ce que** le dispositif de canalisation d'entrée (31) comprend :
- une paroi périphérique (36) ayant une rainure annulaire (37) s'ouvrant vers l'extérieur, la conduite parallèle (33) émergeant dans ladite rainure annulaire (37) ;
- et un canal extérieur (38) qui s'élargit à partir de son entrée reliée à ladite rainure annulaire (37) en direction de sa sortie émergeant à l'entrée dudit secteur (34) du filtre à particules (30).

12. Agencement de moteur selon l'une quelconque des revendications 9 à 11, **caractérisé en ce que** le dispositif de canalisation de sortie (32) comprend
- une paroi périphérique (39) ayant une rainure annulaire (40) s'ouvrant vers l'extérieur, l'entrée de conduite de dérivation émergeant dans ladite rainure annulaire (40) ;
- et un canal extérieur (41) qui se rétrécit à partir de son entrée reliée à la sortie dudit secteur (34) du filtre à particules (30) en direction de sa sortie émergeant dans ladite rainure annulaire (40).
